# NEUE EUROPÄISCHE PATENTSCHRIFT

(11) **EP 2 948 317 B2**
(45) Veröffentlichungstag und Bekanntmachung des Hinweises auf die Entscheidung über den Einspruch: **13.08.2025**
(45) Hinweis auf die Patenterteilung: 29.09.2021
(21) Anmeldenummer: 14701901.2
(22) Anmeldetag: 08.01.2014
(51) Int. Cl.: B43K 19/14, B43K 5/00, B43K 7/00, B43K 8/00, A45D 40/20

(54) **SCHREIBER UND HERSTELLUNGSVERFAHREN**
PEN AND MANUFACTURING METHOD
CRAYON ET PROCÉDÉ DE FABRICATION

(30) Priorität: 23.01.2013 DE 102013001495
(43) Veröffentlichungstag der Anmeldung: 02.12.2015
(73) Patentinhaber: STAEDTLER SE, 90427 Nürnberg (DE)
(72) Erfinder: THIES, Andreas, 91325 Adelsdorf (DE); CZESCHKA, Konstantin, Dr., 91054 Buckenhof (DE); VYHNAL, Alexander, Dr., 90451 Nürnberg (DE)
(74) Vertreter: Lucke, Andreas
(86) Internationale Anmeldenummer: PCT/EP2014/000017
(87) Internationale Veröffentlichungsnummer: WO 2014/114421

(56) Entgegenhaltungen:
- EP-A1- 2 499 932
- EP-B1- 2 313 462
- US-A- 4 230 655

## Beschreibung

Die Erfindung betrifft mit Tinte gefüllte Faserschreiber und/oder mit Paste oder Gel gefüllte Kugelschreiber, nach dem Oberbegriff des Hauptanspruchs.

Unter Komponenten werden nachfolgend Schäfte, Patronen, Umhüllungen, Abschlusskappen und/oder Schoner verstanden. Derartige Stiftkomponenten sind prinzipiell bekannt.

Die Funktion dieser Komponenten liegt darin, dass sie flüssige, pastöse Auftragsmedien aufnehmen bzw. umschließen.

So sind beispielsweise holzgefasste Stifte, bei denen eine Mine von natürlichem Holz umhüllt bzw. ummantelt ist, seit langem bekannt.

In Auftragsmaterialien wie Minen und dergleichen sind migrierende Bestandteile wie Pigmente, Weichmacher, Öle und/oder Wachse enthalten, deren Migrationsvermögen unter anderem von Temperatur und Konzentration abhängt. Unter Migration wird eine unerwünschte Bewegung von Bestandteilen in einer Substanz verstanden. Minenbestandteile wandern dabei in benachbarte Schichten.

Weiter ist es als nachteilig anzusehen, dass in den letzten Jahren aufgrund der mangelnden Verfügbarkeit von Holz der Preis für qualitativ hochwertige Hölzer enorm gestiegen ist, was sich direkt auf die Herstellungskosten der Stifte auswirkt. Als Alternative zu den eingangs beschriebenen holzgefassten Stiften sind aus dem Stand der Technik Stifte bekannt, deren Umhüllung spitzbare geschäumte oder ungeschäumte Polymerextrudate aus Polystyrol (PS), Polyvinylchlorid (PVC), Polypropylen (PP) und Polyethylen (PE) aufweisen.

Da derartige Stiftumhüllungen aus nahezu 100% Polymer bestehen, sind derartige Stifte aus ökologischer Sicht nicht akzeptabel.

Dieser ökologische Gesichtspunkt trifft ebenfalls auf Schäfte von Kugelschreibern, Tintenschreibgeräten und/oder Tintenpatronen zu.

Weiter sind aus der DE 10 2008 034 015 A1 Stifte mit Minenumhüllungen aus sogenannten Wood-Plastic-Composites (WPC) bekannt.

Es hat sich jedoch als nachteilig herausgestellt, dass bei porösen und/oder infiltrierbaren Minenumhüllungen durch die Migration von Minenkomponenten irreversible Schäden auftreten, wie z.B. Verfärbungen, Festigkeitsabnahmen und Verschmutzungen der Oberfläche. Des Weiteren werden dem migrierenden Medium dabei auch Bestandteile entzogen, die für seinen bestimmungsgemäßen Gebrauch notwendig sein können und damit die generelle Anwendung des Produktes schädigen oder sogar unmöglich machen.

Ebenso sind aus der EP 2499932, der EP 2313462 und der US 4230655 Hülsenkörper, Minenumhüllungen und Holzersatzwerkstoffe für Minen von Schreib, oder Kosmetikstiften bekannt.

Nachteilig ist es bei den genannten Schriften anzusehen, dass diese keine Lösung für migrierende Bestandteile in flüssigen oder pastösen Auftragsmitteln beinhalten.

**Aufgabe** der Erfindung ist es daher, eine Komponente für Schreib-, Zeichen-, Mal- und/oder Kosmetikstifte zu schaffen, die sicher stellt, dass Stifte welche die Komponente beinhalten über lange Zeit und auch bei erhöhter Temperatur keine Qualitätsverminderung zeigen, unabhängig davon, ob das migrierende Bestandteile enthaltende Auftragsmedium flüssig oder pastös ausgebildet ist.

Diese Aufgabe wird mit den Merkmalen des Anspruchs 1 gelöst.

Vorteilhafte Ausgestaltungen werden in den Unteransprüchen dargelegt.

Die erfindungsgemäß aufgebaute Komponente für Schreib-, Zeichen-, Mal- und/oder Kosmetikstifte zur Aufnahme von mindestens einem Auftragsmedium, weist mindestens eine Hülse aus mindestens einem polymergebundenen Holzersatzwerkstoff (WPC) auf, wobei der Holzersatzwerkstoff 15 - 30 Gew.-% des mindestens einen polymeren Bindemittels, 50 - 80 Gew.-% des mindestens einen organischen Füllstoffs, 0 - 20 Gew.-% mindestens eines anorganischen Füllstoffs, 0,5 - 5 Gew.-% des mindestens einen Haftvermittlers, 1 - 30 Gew.-% des mindestens einen Wachses, 0 - 10 Gew.-% mindestens eines Farbpigments, und 0 - 10 Gew.-% mindestens eines Additivs aufweist, und wobei die Hülse eine Hülseninnenwandung und eine Hülsenaußenwandung aufweist. Weiterhin weist die erfindungsgemäß aufgebaute Komponente mindestens eine Migrationssperrschicht auf, wobei die mindestens eine Migrationssperrschicht die Hülseninnenwandung der mindestens einen Hülse mittelbar oder unmittelbar bedeckt.

Bedeckt die mindestens eine Migrationssperrschicht die Hülsenwandung mittelbar, so weist die erfindungsge-mäße Komponente weiterhin mindestens eine Haftvermittlerschicht auf, die die Hülseninnenwand unmittelbar bedeckt und zwischen der Hülse und der min-destens einen Migrationssperrschicht angeordnet ist. Mindestens eine Haftvermittlerschicht ist dann ausgebildet, wenn die Polymere des mindestens einen Holzersatzwerkstoffes der mindestens einen Hülse und die Polymere der mindestens einen Migrationssperrschicht inkompatibel sind.

Der Haftvermittler koppelt hierbei einerseits an das mindestens eine Polymer des mindestens einen Holzersatzes und andererseits an das mindestens eine Polymer in der Migrationssperrschicht an. Eine feste und permanente Verbindung zwischen der mindestens einen Migrationssperrschicht und dem mindestens einen Holzersatzwerkstoff wird damit hergestellt.

Die mindestens eine Migrationssperrschicht kann beispielsweise aus einem Polyolefin, insbesondere Polyethylen (PE) und/oder Polypropylen (PP) oder Polyethylenterephthalat (PET) oder Polyvinylchlorid (PVC) oder Styrolpolymeren wie Polystyrol (PS), Styrol-Acrylnitril (SAN) und Acrylnitril-Butadien-Styrol (ABS) gebildet sein.

Die Migrationssperrschicht ist dabei auf die Polarität des aufzunehmenden Auftragsmediums abgestimmt.

Die mindestens eine Migrationssperrschicht weist eine Schichtdicke von kleiner 2 mm auf.

Die mindestens eine Haftvermittlerschicht kann aus einem Copolymer, einem Blockpolymer, einem Pfropfpolymer oder einer Polymermischung aus einem oder mehreren Polymeren bestehen.

Die Schichtdicke der Haftvermittlerschicht liegt im Bereich von 0,01 mm bis 1 mm.

Die Hülsenaußenwandung kann zumindest teilweise mit mindestens einer Dekorschicht bedeckt sein, welche aus Polymeren oder Polymercompounds und/oder Lacken und/oder Folien ausgebildet ist.

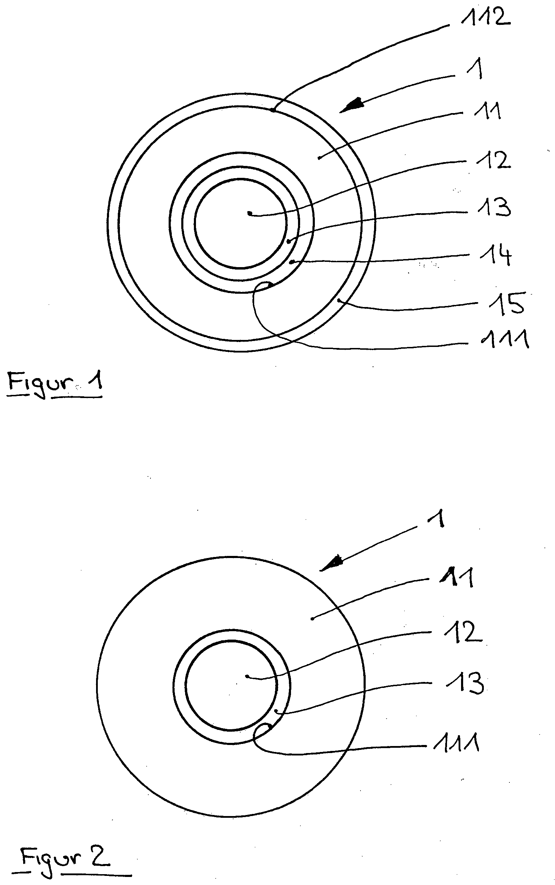

Ferner kann die Hülsenaußenwandung zumindest teilweise oder in Teilbereichen eine dreidimensionale Struktur bzw. dreidimensionale Strukturen aufweisen. Die Struktur bzw. Strukturen können direkt auf der Hülsenaußenwandung und/oder auf der die Hülsenaußenwandung bedeckenden Dekorschicht angeordnet sein. Nachfolgend soll die erfindungsgemäße Komponente anhand der **Figuren 1 bis 3** näher dargestellt und erläutert werden.
Figur 1: Aufsicht auf die Spitze eines Kosmetikstiftes;
Figur 2: Aufsicht auf die Spitze eines Farbstiftes;
Figur 3: Kugelschreiber in Seitenansicht mit im Schnitt dargestelltem Schaft;

Der Stift nach **Figur 1** zeigt einen Kosmetikstift in Form eines Eyeliner, bestehend aus einer Hülse 11, einem Auftragsmedium 12, einer Migrationssperrschicht 13, einer Haftvermittlerschicht 14 sowie einer Dekorschicht 15.

Das Auftragsmedium 12 in Form einer Weichmine setzt sich beispielsweise wie in US 5,039,519, Beispiel 1 beschrieben zusammen. Durch die Migrationssperrschicht 13 kann verhindert werden, dass Pigmente, beispielsweise das "yellow iron oxide" in den Holzersatz/Hülse 11 migrieren. Um eine Migration dieser Bestandteile Richtung Hülse/Holzersatz 11 zu verhindern, ist zwischen Auftragsmedium 12 und Holzersatz 11 eine Migrationssperrschicht 13 angeordnet.

Zwischen der Hülseninnenwandung 111 der Hülse 11 und der Migrationssperrschicht 13 ist zudem eine Haftvermittlerschicht 14 angeordnet, da das Polystyrol (PS) der Migrationssperrschicht 13 inkompatibel zum Polyolefin (PE-HD) des Holzersatzes/Hülse 11 ist. Die Migrationssperrschicht 13 bedeckt die Hülseninnenwandung 111 der Hülse 11 nur mittelbar.

Der Haftvermittler 14 ist in diesem Fall ein Styrol-Budatien-Copolymer (SB). Durch den Haftvermittler bzw. die Haftvermittlerschicht ist eine feste Kopplung zwischen den inkompatiblen Polymeren gewährleistet.

Die Dekorschicht 15, welche auf der Hülsenaußenwandung 112 aufgebracht ist, liegt in dieser Ausführung als farbiges WPC vor.

**Beispielrezeptur** für den Holzersatz gemäß Figur 1/Ausführung 1:

| | |
|---|---|
| Polyolefin (PE-HD) | 20, 0 Gew. - % |
| Holzmehl | 70, 0 Gew. - % |
| Polypropylen mit gepfropftem Maleinsäureanhydrid | 1,0 Gew. - % |
| Amidwachs | 3,0 Gew. - % |
| Stearinsäure | 1,0 Gew. - % |
| Bornitrid | 5,0 Gew. - % |

Nicht dargestellt ist eine Ausführungsvariante, bei der die Hülse (11) aus mindestens zwei unterschiedlichen Holzersatzwerkstoffen ausgebildet ist, welche sich hinsichtlich ihrer Färbung und/oder mechanischen Eigenschaften unterscheiden.

In **Figur 2** wird ein nicht beanspruchter Stift 1 in Form eines holzgefassten Farbstiftes gezeigt, welcher eine feste Mine als Auftragsmedium 12 beinhaltet. Die Mine 12 ist von einer Migrationssperrschicht 13 und einer Hülse 11 umschlossen. Die Migrationssperrschicht 13 sowie der Holzersatzwerkstoff/Hülse 11 weisen als polymeres Bindemittel ein Polyolefin (PE) auf, was zur Folge hat, dass in dieser Ausführung keine Haftvermittlerschicht (14) ausgebildet sein muss, da das Problem der inkompatiblen Polymere entfällt. Damit ist auch ohne eine Haftvermittlerschicht ist eine feste Kopplung/Verbindung zwischen Migrationssperrschicht 13 und Hülse 11 gewährleistet.

Die Migrationssperrschicht 13 bedeckt in dieser Ausführung die Hülseninnenwandung 111 unmittelbar.

Eine Beispielrezeptur für den Holzersatz gemäß Figur 2/Ausführung 2 kann sich beispielhaft wie nachfolgend aufgeführt zusammensetzen:

| | |
|---|---|
| Polyethylen High Density (PE-HD) | 25,0 Gew.-% |
| Holzmehl | 65,0 Gew.-% |
| Polyethylen mit gepfropftem Maleinsäureanhydrid | 2,0 Gew.-% |
| Amidwachs | 3,0 Gew.-% |
| Stearinsäure | 3,0 Gew.-% |
| Titandioxid | 2,0 Gew.-% |

Der in den Ausführungsbeispielen/Figuren 1 und 2 angeführte Holzersatz kann verschiedene Ausprägungen annehmen. Beispielhaft sei auf Ausprägungen gemäß der EP 2 313 426 B1 verwiesen.

Als besonders vorteilhaft hat sich der anspruchsgemäße Holzersatzwerkstoff erwiesen, der sich gemäß nachfolgender Rahmenrezeptur zusammensetzt:

| | |
|---|---|
| 15 - 30 Gew.-% | mindestens eines polymeren Bindemittels, |
| 50 - 80 Gew.-% | mindestens eines organischen Füllstoffs, |
| 0 - 20 Gew.-% | mindestens eines anorganischen Füllstoffs, |
| 0,5 - 5 Gew.-% | mindestens eines Haftvermittlers, |
| 1 - 30 Gew.-% | mindestens eines Wachses, |
| 0 - 10 Gew.-% | mindestens eines Farbpigments, und |
| 0 - 10 Gew.-% | mindestens eines Additivs, |

Zudem hat es sich als vorteilhaft erwiesen, wenn das Bindemittel aus der Gruppe der Polyolefine ausgewählt ist.

Es hat sich in überraschender Weise gezeigt, dass sich die Spitzbarkeit von Stiften nach den Figuren 1 und 2 nicht bzw. kaum verändert/verschlechtert, da die Sperrschicht nicht dick gestaltet und/oder ausgeführt werden muss.

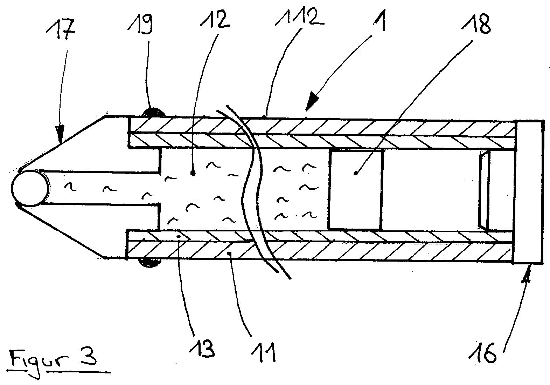

Ein weiteres Ausführungsbeispiel ist in **Figur 3** näher gezeigt und beschrieben.

Figur 3 zeigt einen Stift 1 in Form eines Kugelschreibers, der eine erfindungsgemäße Komponente in Form eines Schaftes aufweist, der aus einer Hülse 11 und einer Migrationssperrschicht 13 zusammengesetzt ist. Der Schaft ist an einem Ende durch eine Spitzeneinheit 17 und am anderen Ende durch einen Abschlussstopfen 16 verschlossen.

Der so gebildete Aufnahmeraum umschließt das Auftragsmedium 12 dicht, dicht auch gegen migrierende Bestandteile des Auftragsmediums 12.

Spitzenseitig liegt das Auftragsmedium 12 in Form einer Kugelschreiberpaste an, wobei ein Rückfließen der Paste durch den Nachläufer 18 verhindert wird. Kugelschreiberpasten beinhalten migrationsfähige Substanzen, welche ohne Ausbildung einer Migrationssperrschicht 13 in den Holzersatz/Hülse 11 eindringen bzw. migrieren würden.

In dieser Ausführung sind auf der Hülsenaußenwandung 112 dreidimensionale Strukturen 19 angeordnet.

Ein nicht beanspruchtes **Verfahren zur Herstellung derartiger Komponenten** kann wie nachfolgend beschrieben erfolgen. Insbesondere das Verfahren der Co-Extrusion liefert hierzu ausgezeichnete Ergebnisse.
- Die unterschiedlichen Bestandteile der Komponente, bestehend aus Migrationssperrschicht, Holzersatzwerkstoff und ggf. Haftvermittler werden jeweils getrennt voneinander in einem Extruder aufgeschmolzen;
- Danach werden die viskosen Schmelzen einem gemeinsamen Werkzeug zugeführt;
- Im Werkzeug werden die einzelnen Bestandteile geometrisch vorgeformt, zusammengeführt und gemeinsam ausgestoßen;
- Nach Verlassen des Werkzeuges wird der so extrudierte Endlosstrang/Hohlprofil abgekühlt und erstarrt in der gewünschten Geometrie;
- Der endlose Strang wird am Ende der Kühlung getrennt, die damit hergestellten Teilstücke entsprechen den erfindungsgemäßen Komponenten;
- Diese Komponenten können ggf. zu Nachfolgeeinheiten, wie beispielsweise Dekorations- und/oder Montageeinheiten zugeführt werden;

Verwendung finden die Komponenten in Schreib-, Zeichen-, Mal- und/oder Kosmetikstiften. Bei derartigen Stiften liegt das mindestens eine Auftragsmedium bei Umgebungstemperatur in flüssigem, pastösem Aggregatzustand vor, wobei das Auftragsmedium den von der mindestens einen Migrationssperrschicht umgebenden Hohlraum zumindest teilweise ausfüllt.

Im Bereich der Kosmetik kann die Komponente in sogenannten Eyelinern, Augenbrauenstiften und/oder Lippenkonturstiften verwendet werden.

Die Außenkontur der Komponente kann in allen Anwendungen oder Verwendungen rund, oval, ellipsenförmig, vieleckig und/oder, sternförmig ausgebildet sein. Hier sind aufgrund des Verfahrens der Extrusion vielfältige Ausprägungen der Außenkontur möglich.

### Positionsliste

- 1: Schreib-, Zeichen-, Mal- und/oder Kosmetikstift
- 11: Hülse
- 111: Hülseninnenwandung
- 112: Hülsenaußenwandung
- 12: Auftragsmedium
- 13: Migrationssperrschicht
- 14: Haftvermittlerschicht
- 15: Dekorschicht
- 16: Abschlussstopfen
- 17: Spitzeneinheit
- 18: Nachläufer
- 19: dreidimensionale Struktur/Strukturen

## Patentansprüche

1. **Mit Tinte gefüllter Faserschreiber und/oder mit Paste oder Gel gefüllter Kugelschreiber** mit einer Komponente zur Aufnahme von mindestens einem Auftragsmedium, wobei die Komponente mindestens eine Hülse aus mindestens einem polymergebundenen Holzersatzwerkstoff umfasst, die eine Hülseninnenwandung und eine Hülsenaußenwandung aufweist,
**wobei** der Holzersatzwerkstoff mindestens ein polymeres Bindemittel, mindestens einen organischen Füllstoff, mindestens einen Haftvermittler und mindestens ein Wachs beinhaltet,
**wobei** der Holzersatzwerkstoff
| | |
|---|---|
| 15 - 30 Gew.-% | des mindestens einen polymeren Bindemittels, |
| 50 - 80 Gew.-% | des mindestens einen organischen Füllstoffs, |
| 0 - 20 Gew.-% | mindestens eines anorganischen Füllstoffs, |
| 0,5 - 5 Gew.-% | des mindestens einen Haftvermittlers, |
| 1 - 30 Gew.-% | des mindestens einen Wachses, |
| 0 - 10 Gew.-% | mindestens eines Farbpigments, und |
| 0 - 10 Gew.-% | mindestens eines Additivs |
aufweist,
**wobei** die Komponente weiterhin mindestens eine Migrationssperrschicht aufweist,
**wobei** die mindestens eine Migrationssperrschicht die Hülseninnenwandung der mindestens einen Hülse mittelbar oder unmittelbar bedeckt.

2. **Schreiber** nach Anspruch 1,
**dadurch gekennzeichnet,**
**dass** die mindestens eine Migrationssperrschicht die Hülseninnenwandung der mindestens einen Hülse mittelbar bedeckt, wobei die Komponente weiterhin mindestens eine Haftvermittlerschicht aufweist, die die Hülseninnenwand unmittelbar bedeckt und zwischen der mindestens einen Hülse und der mindestens einen Migrationssperrschicht angeordnet ist.

3. **Schreiber** nach Anspruch 1 oder Anspruch 2,
**dadurch gekennzeichnet,**
**dass** die mindestens eine Migrationssperrschicht aus einem Polyolefin, insbesondere Polyethylen (PE) und/oder Polypropylen (PP) oder Polyethylenterephthalat (PET) oder Polyvinylchlorid (PVC) oder Styrolpolymeren wie Polystyrol (PS), Styrol-Acrylnitril (SAN) und Acrylnitril-Butadien-Styrol (ABS) gebildet ist.

4. **Schreiber** nach Anspruch 1 oder Anspruch 2,
**dadurch gekennzeichnet,**
**dass** die mindestens eine Haftvermittlerschicht aus einem Copolymer, einem Blockpolymer, einem Pfropfpolymer oder einer Polymermischung aus einem oder mehreren Polymeren gebildet ist.

5. **Schreiber** nach einem der Ansprüche 1 bis 4,
**dadurch gekennzeichnet,**
**dass** die Komponente eine runde, ovale, ellipsenförmige, vieleckige und/oder, sternförmige Außenkontur aufweist.

6. **Schreiber** nach einem der Ansprüche 1 bis 5,
**dadurch gekennzeichnet,**
**dass** die Hülse eine Wandstärke im Bereich von 0,5 bis 5 mm aufweist.

7. **Schreiber** nach einem der Ansprüche 1 bis 3,
**dadurch gekennzeichnet,**
**dass** die mindestens eine Migrationssperrschicht eine Schichtdicke von kleiner 2 mm aufweist.

8. **Schreiber** nach einem der Ansprüche 1 oder 2 in Kombination mit einem der Ansprüche 3 bis 7,
**dadurch gekennzeichnet,**
**dass** die mindestens eine Haftvermittlerschicht eine Schichtdicke im Bereich von 0,01 bis 1 mm aufweist.

9. **Schreiber** nach einem der Ansprüche 1 bis 8,
**dadurch gekennzeichnet,**
**dass** die Hülsenaußenwandung zumindest teilweise mit einer Dekorschicht bedeckt ist.

10. **Schreiber** nach einem der Ansprüche 1 bis 9,
**dadurch gekennzeichnet,**
**dass** die Hülsenaußenwandung oder die zumindest teilweise mit einer Dekorschicht bedeckte Hülsenaußenwandung zumindest teilweise eine dreidimensionale Struktur/Strukturen aufweist.

11. **Schreiber** nach Anspruch 9 oder Anspruch 10,
**dadurch gekennzeichnet,**
**dass** die mindestens eine Dekorschicht aus Polymeren oder Polymercompounds und/oder Lacken und/oder Folien gebildet ist.

12. **Schreiber** nach einem der Ansprüche 1 bis 11,
**dadurch gekennzeichnet,**
**dass** die Hülse aus mindestens zwei unterschiedlichen Holzersatzwerkstoffen gebildet ist, die sich hinsichtlich ihrer Färbung und/oder mechanischen Eigenschaften unterscheiden.

13. **Schreiber** nach einem der Ansprüche 1 bis 12,
**dadurch gekennzeichnet,**
**dass** das mindestens eine Auftragsmedium einen von der mindestens einen Migrationssperrschicht umgebenden Hohlraum zumindest teilweise ausfüllt.

## Claims

1. **Fibre pen, which is filled with ink, and/or ball pen, which is filled with paste or gel,** with a component for reception of at least one coating medium, wherein the component comprises a sleeve of at least one polymer-bound substitute wood material, the sleeve having a sleeve inner wall and a sleeve outer wall,
**wherein** the substitute wood material contains at least one polymer binder, at least one organic filler, at least one adhesion promoting agent and at least one wax,
**wherein** the substitute wood material comprises
15 - 30 weight % of the at least one polymer binder,
50 - 80 weight % of the at least one organic filler,
0 - 20 weight % of at least one inorganic filler,
0.5 - 5 weight % of the at least one adhesion promoting agent,
1 - 30 weight % of the at least one wax,
0 - 10 weight % of at least one colouring pigment, and
0 - 10 weight % of at least one additive.
**wherein** the component further comprises at least one migration blocking layer and
**wherein** the at least one migration blocking layer indirectly or directly covers the sleeve inner wall of the at least one sleeve.

2. **Pen** according to claim 1, **characterised in that** the at least one migration blocking layer indirectly covers the sleeve inner wall of the at least one sleeve, wherein the component further comprises at least one adhesion promoting layer which directly covers the sleeve inner wall and which is arranged between the at least one sleeve and the at least one migration blocking layer.

3. **Pen** according to claim 1 or claim 2, **characterised in that** the at least one migration blocking layer is formed from a polyolefin, particularly polyethylene (PE) and/or polypropylene (PP) or polyethylene terephthalate (PET) or poly-vinylchloride (PVC) or styrol polymers such as polystyrol (PS), styrol-acrylnitrile (SAN) and acrylnitrile-butadiene-styrol (ABS).

4. **Pen** according to claim 1 or 2, **characterised in that** the at least one adhesion promoting layer is formed from a copolymer, a mass polymer, a graft polymer or a polymer mixture of one or more polymers.

5. **Pen** according to any one of claims 1 to 4, **characterised in that** the component has a round, oval, elliptical, polygonal and/or star-shaped outer contour.

6. **Pen** according to any one of claims 1 to 5, **characterised in that** the sleeve has a wall thickness in the range of 0.5 to 5 millimetres.

7. **Pen** according to any one of claims 1 to 3, **characterised in that** the at least one migration blocking layer has a layer thickness of less than 2 millimetres.

8. **Pen** according to one of claims 1 and 2 in combination with any one of claims 3 to 7,
**characterised in that** the at least one adhesion promoting layer has a layer thickness in the range of 0.01 to 1 millimetre.

9. **Pen** according to any one of claims 1 to 8, **characterised in that** the sleeve outer wall is covered at least partly by a decorative layer.

10. **Pen** according to any one of claims 1 to 9, **characterised in that** the sleeve outer wall or the sleeve outer wall covered at least partly by a decorative layer has at least in part a three-dimensional structure or three-dimensional structures.

11. **Pen** according to claim 9 or claim 10, **characterised in that** the at least one decorative layer is formed from polymers or polymer compounds and/or lacquers and/or films.

12. **Pen** according to any one of claims 1 to 11, **characterised in that** the sleeve is formed from at least two different substitute wood materials which differ with respect to the coloration and/or mechanical properties thereof.

13. **Pen** according to any one of claims 1 to 12, **characterised in that** at least one coating medium at least partly fills out a cavity surrounded by the at least one migration blocking layer.

## Revendications

1. Feutre d'écriture empli d'encre et/ou stylo à bille empli de pâte ou de gel, muni d'un composant conçu pour recevoir au moins un fluide à déposer, ledit composant incluant au moins un manchon qui est constitué d'au moins un matériau substitutif du bois, à liaison polymère, qui présente une paroi intérieure de manchon et une paroi extérieure de manchon,
ledit matériau substitutif du bois refermant au moins un liant polymère, au moins une substance de charge organique, au moins un agent d'adhérence et au moins une cire,
| ledit matériau substitutif du bois comprenant | |
|---|---|
| 15 à 30 % en poids | dudit au moins un liant polymère, |
| 50 à 80 % en poids | de ladite au moins une substance de charge organique, |
| 0 à 20 % en poids | d'au moins une substance de charge inorganique, |
| 0,5 à 5 % en poids | dudit au moins un agent d'adhérence, |
| 1 à 30 % en poids | de ladite au moins une cire, |
| 0 à 10 % en poids | d'au moins un pigment coloré, et |
| 0 à 10 % en poids | d'au moins un additif |
dans lequel
ledit composant est doté, par ailleurs, d'au moins une couche inhibitrice de migration,
ladite au moins une couche inhibitrice de migration recouvrant directement ou indirectement la paroi intérieure de manchon dudit au moins un manchon.

2. Instrument d'écriture selon la revendication 1,
**caractérisé par le fait**
**que** ladite au moins une couche inhibitrice de migration recouvre indirectement la paroi intérieure de manchon dudit au moins un manchon, ledit composant étant doté, par ailleurs, d'au moins une couche d'agent d'adhérence qui recouvre directement la paroi intérieure de manchon et qui est interposée entre ledit au moins un manchon et ladite au moins une couche inhibitrice de migration.

3. Instrument d'écriture selon la revendication 1 ou la revendication 2,
**caractérisé par le fait**
**que** ladite au moins une couche inhibitrice de migration est constituée d'une polyoléfine, en particulier de polyéthylène (PE) et/ou de polypropylène (PP) ou de polytéréphtalate d'éthylène (PET) ou de polychlorure de vinyle (PVC) ou de polymères de styrène tels que le polystyrène (PS), le styrène-acrylonitrile (SAN) et l'acrylonitrile-butadiène-styrène (ABS).

4. Instrument d'écriture selon la revendication 1 ou la revendication 2, **caractérisé par le fait**
**que** ladite au moins une couche d'agent d'adhérence est constituée d'un copolymère, d'un polymère séquencé, d'un polymère greffé ou d'un mélange de polymères constitué d'un ou de plusieurs polymères.

5. Instrument d'écriture selon l'une des revendications 1 à 4,
**caractérisé par le fait**
**que** ledit composant présente un profil extérieur circulaire, ovale, elliptique, polygonal et/ou en forme d'étoile.

6. Instrument d'écriture selon l'une des revendications 1 à 5,
**caractérisé par le fait**
**que** ledit manchon présente une épaisseur de paroi située dans la plage allant de 0,5 à 5 mm.

7. Instrument d'écriture selon l'une des revendications 1 à 3,
**caractérisé par le fait**
**que** ladite au moins une couche inhibitrice de migration possède une épaisseur de couche inférieure à 2 mm.

8. Instrument d'écriture selon l'une des revendications 1 ou 2 en combinaison avec l'une des revendications 3 à 7,
**caractérisé par le fait**
**que** ladite au moins une couche d'agent d'adhérence possède une épaisseur de couche située dans la plage allant de 0,01 à 1 mm.

9. Instrument d'écriture selon l'une des revendications 1 à 8,
**caractérisé par le fait**
**que** la paroi extérieure de manchon est recouverte, au moins partiellement, d'une couche décorative.

10. Instrument d'écriture selon l'une des revendications 1 à 9,
**caractérisé par le fait**
**que** la paroi extérieure de manchon ou la paroi extérieure de manchon recouverte, au moins partiellement, d'une couche décorative présente(nt), au moins partiellement, une structure/des structures tridimensionnelle(s).

11. Instrument d'écriture selon la revendication 9 ou la revendication 10,
**caractérisé par le fait**
**que** ladite au moins une couche décorative est constituée de polymères ou de composés de polymères et/ou de laques et/ou de films.

12. Instrument d'écriture selon l'une des revendications 1 à 11,
**caractérisé par le fait**
**que** ledit manchon est constitué d'au moins deux matériaux substitutifs du bois différents, qui se distinguent par leur coloration et/ou leurs propriétés mécaniques.

13. Instrument d'écriture selon l'une des revendications 1 à 12,
**caractérisé par le fait**
**que** ledit au moins un fluide à déposer comble, au moins partiellement, une cavité entourée par ladite au moins une couche inhibitrice de migration.
